# EUROPEAN PATENT APPLICATION

(11) **EP 4 810 140 A1**
(43) Date of publication of application: **23.09.2026**
(21) Application number: 26154620.4
(22) Date of filing: 28.01.2026
(51) Int. Cl.: A63F 13/98, A63F 13/24

(54) **CONTROLLER GRIP**

(30) Priority: 19.03.2025 CN 202520482988 U
(71) Applicant: Shenzhen DeOne Innovation Technology Co., Ltd, Shenzhen, Guangdong 518000 (CN)
(72) Inventor: HE, BEIJING, Shenzhen, 518000 (CN); LIANG, YAO, Shenzhen, 518000 (CN)
(74) Representative: Metida

(57) **Abstract**

A controller grip is configured to be detachably connected to two game controllers. The controller grip includes a central unit and two connection units respectively arranged on two opposite sides of the central unit. A direction from one of the connection units towards another connection unit is defined as a first direction; the two connection units extend at least partially along a second direction, and the second direction is perpendicular to the first direction. A magnetic member is provided inside each connection unit, and the magnetic member is configured to attract a magnetic component in the game controller, enabling the game controllers to be detachably connected to the connection units respectively.

## Description

### TECHNICAL FIELD

The present disclosure relates to technical field of game controller accessories, and in particular, to a controller grip.

### BACKGROUND

Traditional game consoles adopt a configuration with two controllers and one main unit. The main unit is detachably connected to the controllers, and the main unit includes a display screen configured to display the game visuals. To facilitate portability, traditional game consoles typically have relatively small display screens, which leads to a suboptimal gaming experience for users.

To pursue a better visual experience during gaming, users often connect the game console's main unit to a television or computer and play using detachable controllers. It is found that it is better to secure the two controllers separated from the main unit together. Thus, Controller grips are developed. Traditional controller grips are connected to the controllers via slide rails, making the detachment of the controllers from the controller grips quite cumbersome and inconvenient for both assembly and disassembly.

### SUMMARY

In order to solve shortcomings in existing technologies, the present disclosure is to provide a controller grip to solve above technological problems. The controller grip provided in the present disclosure includes a magnetic component configured to attract a magnetic member in a game controller, so that the game controller can be connected to the controller grip by magnetic attraction, which is convenient for assembly of the controller onto the controller grip and disassembly of the controller off from the controller grip.

A controller grip is configured to be detachably connected to two game controllers. The controller grip includes a central unit and two connection units respectively arranged on two opposite sides of the central unit. A direction from one of the connection units towards another connection unit is defined as a first direction; the two connection units extend at least partially along a second direction, and the second direction is perpendicular to the first direction. A magnetic member is provided inside each connection unit, and the magnetic member is configured to attract a magnetic component in the game controller, enabling the game controllers to be detachably connected to the connection units respectively.

Beneficial Effects of the present disclosure: in the controller grip provided by the embodiments of the present disclosure, by incorporating the magnetic members into the connection units of the controller grip, the magnetic members magnetically attract the magnetic components in the two game controllers respectively, enabling a magnetic connection between the controller grip and the two game controllers. The magnetic connection facilitates easy assembly and disassembly of the controller grip and the two game controllers.

### BRIEF DESCRIPTION OF THE DRAWINGS

FIG. 1 is a schematic view of a controller grip according to an embodiment of the present disclosure.
FIG. 2 is an exploded view of the controller grip according to an embodiment of the present disclosure.
FIG. 3 is a schematic view of a first housing of the controller grip according to an embodiment of the present disclosure.
FIG. 4 is a schematic view of a second housing of the controller grip according to an embodiment of the present disclosure.
FIG. 5 is a cross-sectional view of the controller grip along the line A-A' shown in FIG. 1.
FIG. 6 is an enlarged view of the portion F shown in FIG. 5.
FIG. 7 is a cross-sectional view of the controller grip along the line B-B' shown in FIG. 1.
FIG. 8 is a cross-sectional view of the controller grip along the line C-C' shown in FIG. 1.
FIG. 9 is a cross-sectional view of the controller grip along the line D-D' shown in FIG. 1.
FIG. 10 is a cross-sectional view of the controller grip along the line E-E' shown in FIG. 1.

In the drawings:
100, controller grip; 10, first housing; 11, first sub-central unit; 111, second main body; 1111, second light display hole; 1112, first retaining portion; 1113, first positioning portion; 1114, second positioning portion; 1115, first support portion; 112, second extension; 1121, first avoidance groove; 12, first sub-connection unit; 121, first main body; 1211, third positioning portion; 1212, first light display hole; 122, first extension; 1221, mounting blind hole; 1222, magnetic limiting portion; 1223, hot-melt post; 1224, electrical connector mounting groove; 1225, avoidance hole; 1226, fourth retaining portion; 131, first sub-edge limiting portion; 132, second sub-edge limiting portion; 133, third sub-edge limiting portion; 134, fourth sub-edge limiting portion; 141, first sub-limiting space; 142, second sub-limiting space; 151, first ultrasonic welding groove; 152, second ultrasonic welding groove; 153, third ultrasonic welding groove; 20, second housing; 21, second sub-central unit; 211, third main body; 2112, fourth positioning portion; 2114, second support portion; 212, third extension; 2121, second avoidance groove; 213, fourth extension; 22, second sub-connection unit; 221, fourth main body; 2211, sixth positioning portion; 222, fifth extension; 2221, third retaining portion; 231, fifth sub-edge limiting portion; 232, sixth sub-edge limiting portion; 233, seventh sub-edge limiting portion; 234, eighth sub-edge limiting portion; 241, third sub-limiting space; 242, fourth sub-limiting space; 251, first ultrasonic welding rib; 252, second ultrasonic welding rib; 253, third ultrasonic welding rib; 31, control circuit board; 311, central circuit board; 3111, first limiting hole; 3112, screw hole; 312, connection circuit board; 3121, second limiting hole; 3122, hot-melt hole; 32, charging interface; 33, electrical connector; 331, third limiting hole; 40, magnetic member; 50, receiving cavity; 60, foam; 70, indicator light unit; 80, screw; 101, central unit; 102, connection unit; 103, avoidance structure; X, first direction; Y, second direction; Z, third direction.

### DETAILED DESCRIPTION OF THE EMBODIMENTS

The following is a further detailed description of the embodiments of the present disclosure in combination with the attached drawings.

It should be understood that detailed embodiments described herein are merely illustrative of the present disclosure and are not intended to limit the present disclosure. Those skilled in the art may make modifications to the present disclosure that do not contribute to creation as needed after reading this specification, but as long as they are within the scope of the claims of the present disclosure, they shall be protected by the patent law.

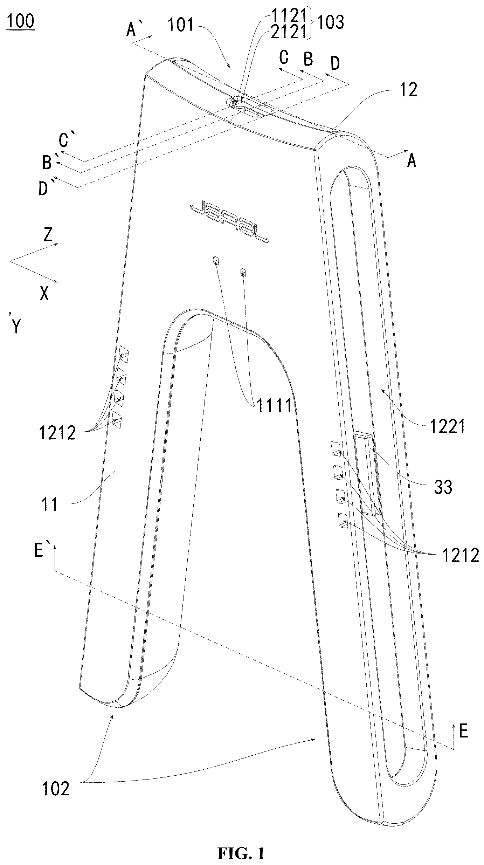

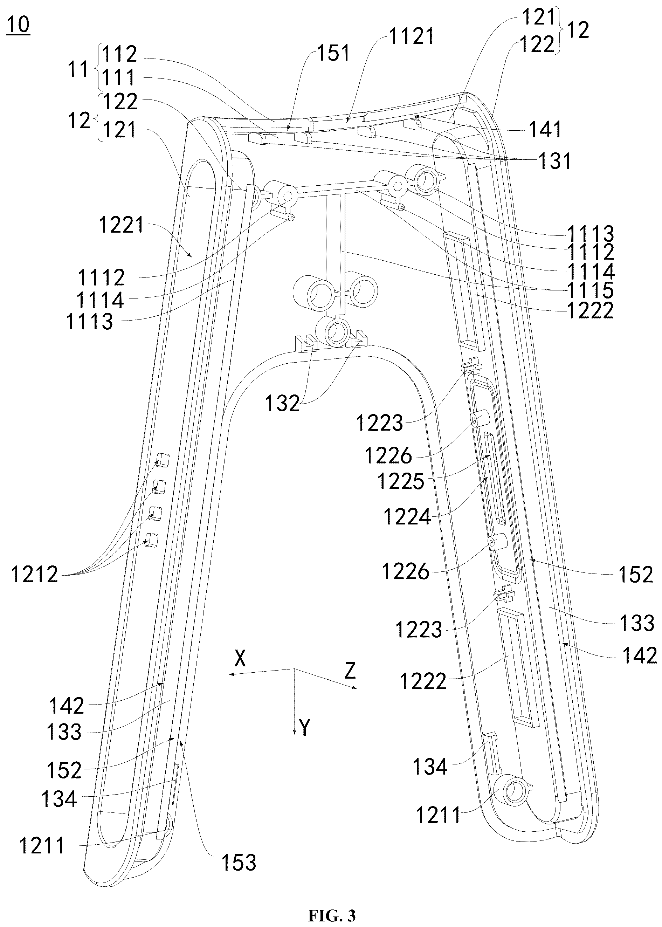

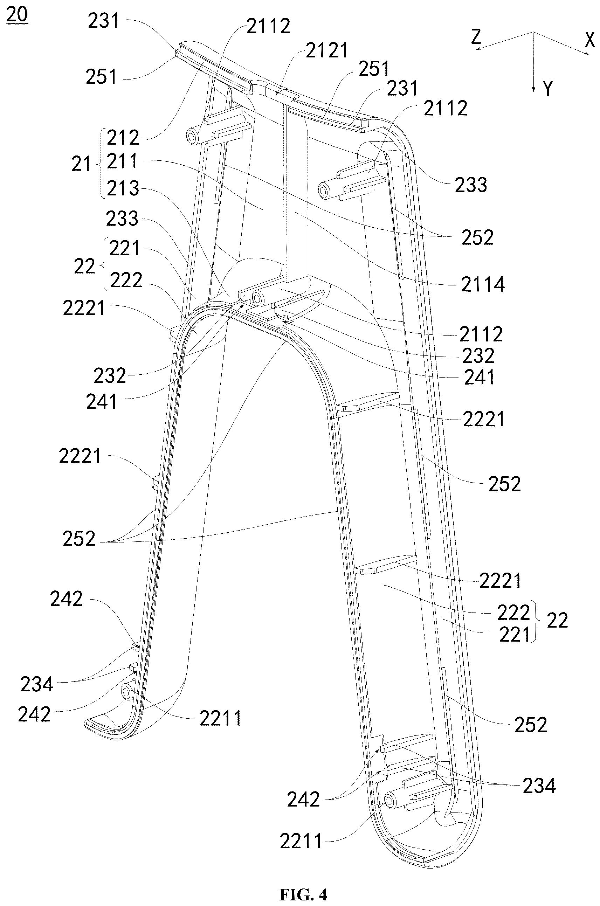

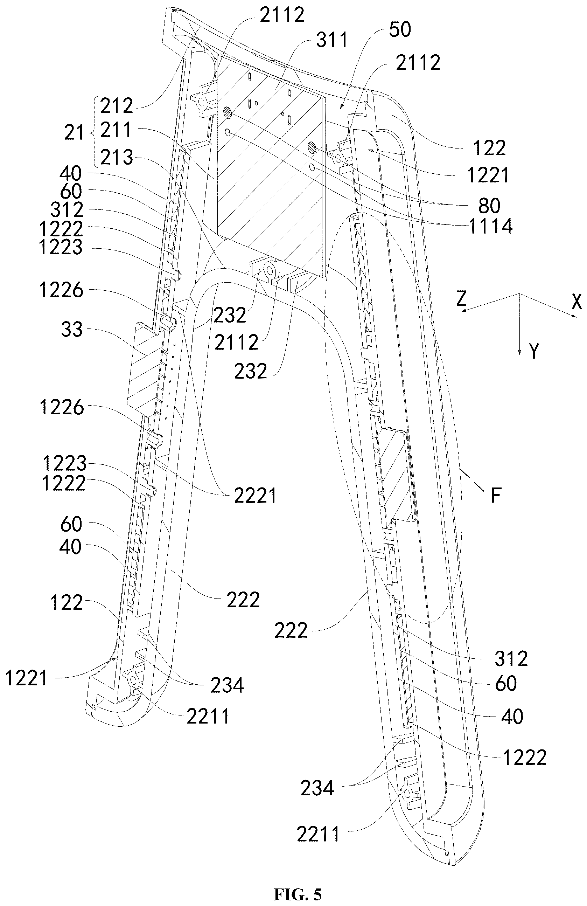

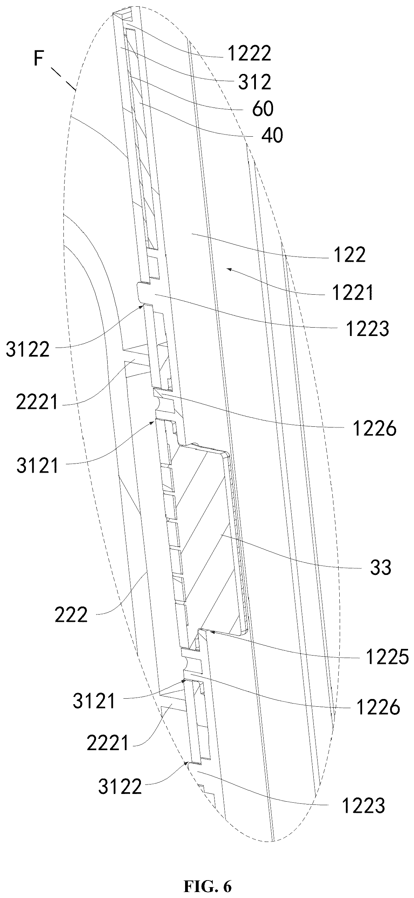

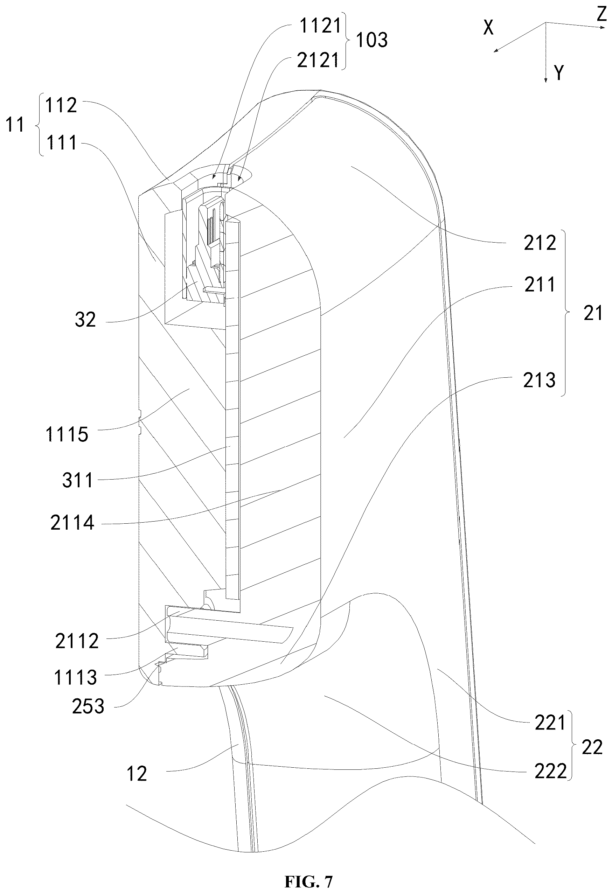

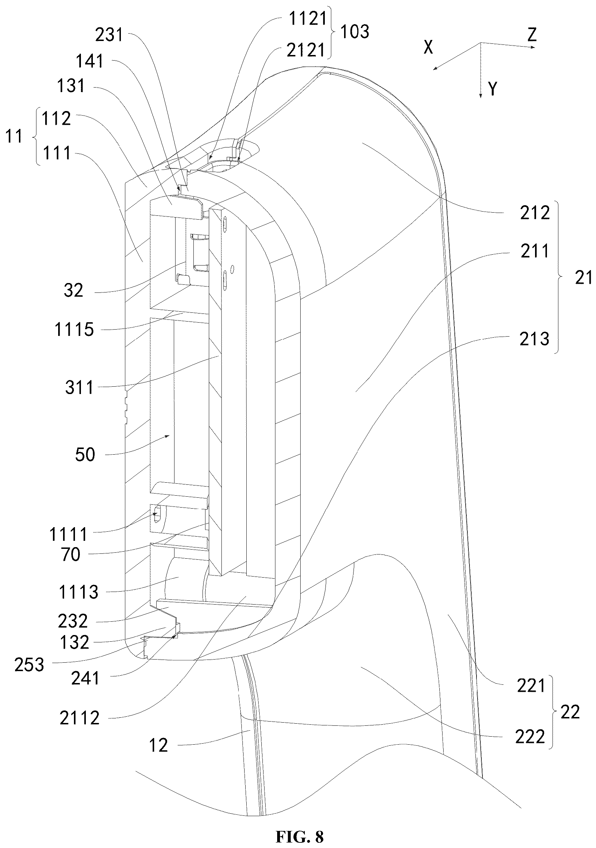

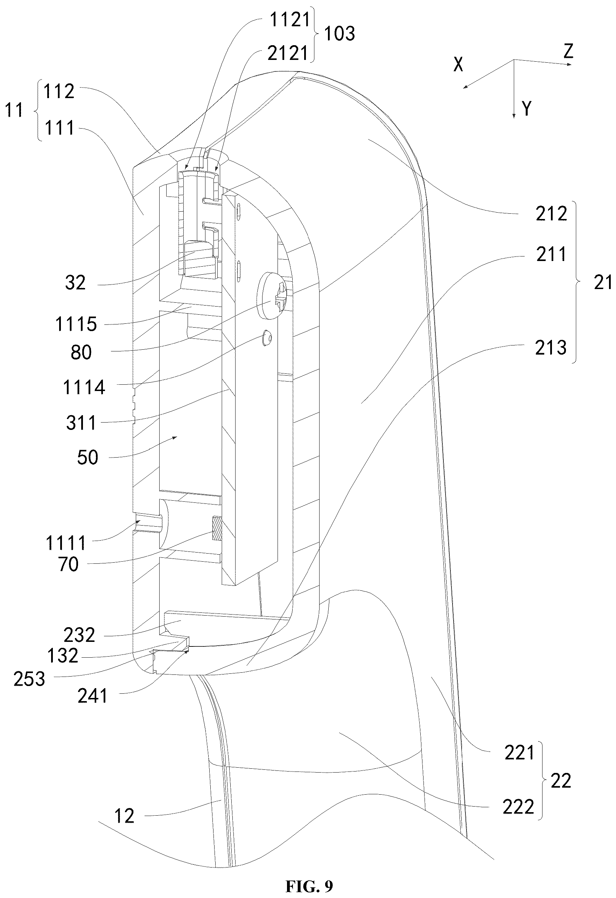

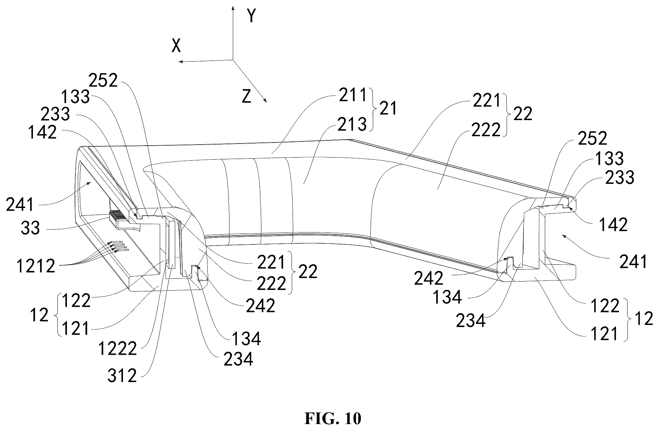

Please referring to FIGS. 1-10, an embodiment of the present disclosure provides a controller grip 100. The controller grip 100 is configured to be detachably connected to a game controller. The controller grip 100 includes a central unit 101 and two connection units 102. The two connection units 102 are respectively arranged on two opposite sides of the central unit 101. A direction from one of the two connection units 102 to another of the two connection units 102 is defined as a first direction X. The connection unit 102 extends at least partially along a second direction Y, which is substantially perpendicular to the first direction X. At least one magnetic member 40 is provided inside the connection unit 102. The at least one magnetic member 40 is configured to magnetically attract a magnetic component in a game controller to achieve a detachable connection between the game controller and the connection unit 102.

Specifically, in their extending directions, the two connection units 102 extend at least partially away from each other, causing the two game controllers to be positioned at an angle relative to each other, thereby improving the user experience.

Specifically, the magnetic component in the game controller is a magnetic part or a metal plate that can be magnetically attracted by the magnetic member 40 inside the connection unit 102. Preferably, the magnetic component in the game controller is a magnetic part; in some embodiments, the magnetic part is a magnet. In this embodiment, the magnetic component is a metal plate, and the magnetic member 40 is a magnet.

As shown in FIGS. 1-3 and FIGS. 5-6, the side of the connection unit 102 facing away from the central unit 101 is provided with a mounting blind hole 1221. The mounting blind hole 1221 is configured to accommodate at least a portion of the game controller, enabling a nested connection between the game controller and the connection unit 102.

Specifically, a mounting part protrudes from a side of the game controller adjacent to the controller grip 100. This mounting part is configured to be inserted into the mounting blind hole 1221, thereby restricting relative movement between the game controller and the controller grip 100 in a direction perpendicular to the direction from the controller grip 100 toward the game controller. It can enhance stability of the connection between the controller grip 100 and the game controller.

As shown in FIGS. 1-3, each connection unit 102 is provided with at least one first light display hole 1212. The at least one first light display hole 1212 extends along a third direction Z, which is perpendicular to both the second direction Y and the first direction X. The first light display hole 1212 is in communication with the mounting blind hole 1221, allowing light emitted from the portion of the game controller inserted into the mounting blind hole 1221 to pass through the first light display hole 1212.

Specifically, each of the two connection units 102 is provided with four first light display holes 1212. The four first light display holes 1212 are arranged at a side of the connection unit 102 facing away from the central unit 101 and are arranged along the second direction Y.

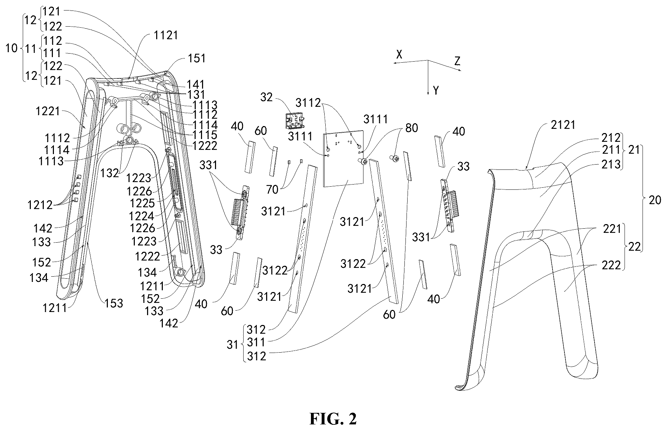

As shown in FIGS. 2 and 5-6, the controller grip 100 further includes a charging interface 32, a control circuit board 31, and an electrical connector 33, which are electrically connected in sequence. The charging interface 32 is configured to be electrically connected to an external power source. The electrical connector 33 is configured to be electrically connected to the game controller. The control circuit board 31 is configured to control whether to discharge power to the electrical connector 33 to charge the game controller.

Specifically, the control circuit board 31 includes a central circuit board 311 and two connection circuit boards 312. The central circuit board 311 is arranged in the central unit 101. The two connection circuit boards 312 are respectively arranged in the two connection units 102. The charging interface 32 is electrically connected to the central circuit board 311. The central circuit board 311 is respectively electrically connected to the two connection circuit boards 312. The two electrical connectors 33 are respectively electrically connected to the two connection circuit boards 312.

More specifically, the electrical connector 33 is a male plug, while the game controller is provided with a female socket. By inserting the electrical connector 33 into the game controller-that is, inserting the male plug into the female socket-an electrical connection between the controller grip 100 and the game controller is achieved. By connecting the charging interface 32 to the external power source, current flows through the central circuit board 311, the connection circuit board 312, and the electrical connector 33, thereby transmitting power to the game controllers to simultaneously charge both the game controllers.

Furthermore, the electrical connector 33 is interference-fitted with the female socket of the game controller, further enhancing the stability of the connection between the controller grip 100 and the game controller.

As shown in FIGS. 1-2 and FIGS. 8-9, the controller grip 100 further includes an indicator light unit 70. The indicator light unit 70 is electrically connected to the control circuit board 31 to allow the control circuit board 31 to control display of the indicator light unit 70. The second main body 111 is provided with a second light display hole 1111 configured to allow light emitted by the indicator light unit 70 to pass through to identify a charging status of the controller grip 100.

Specifically, the indicator light unit 70 includes at least one LED bulb and the at least one LED bulb is electrically connected to the central circuit board 311. In this embodiment, the indicator light unit 70 includes two LED bulbs configured to indicate whether the controller grip 100 is currently charged by the game controllers.

In other embodiments, the indicator light unit 70 is a display screen configured to display information such as the charging status of the controller grip 100.

As shown in FIGS. 1-10, the controller grip 100 includes a first housing 10 and a second housing 20. The first housing 10 and the second housing 20 are connected to form a receiving cavity 50 configured to accommodate the magnetic member 40.

The first housing 10 includes a first sub-central unit 11 and two first sub-connection units 12. The two first sub-connection units 12 are respectively arranged on two opposite sides of the first sub-central unit 11. The second housing 20 includes a second sub-central unit 21 and two second sub-connection units 22. The two second sub-connection units 22 are respectively arranged on two opposite sides of the second sub-central unit 21. The first sub-central unit 11 and the second sub-central unit 21 together form the central unit 101, while the first sub-connection unit 12 and a corresponding one of the two second sub-connection units 22 together form one of the two connection units 102.

Specifically, the first sub-central unit 11 includes a second main body 111 and a second extension 112. The second main body 111 extends at least partially along the second direction Y. The second extension 112 is arranged at one end of the second main body 111 in an opposite direction of the second direction Y, and it extends at least partially along the third direction Z. The second sub-central unit 21 includes a third main body 211, a third extension 212, and a fourth extension 213. The third main body 211 extends at least partially along the second direction Y. The third extension 212 and the fourth extension 213 are respectively arranged at two opposite ends of the third main body 211 along the second direction Y. The third extension 212 arranged adjacent to the second extension 112. When the first housing 10 and the second housing 20 are assembled into one unit, the end of the third extension 212 facing away from the third main body 211 connects to the end of the second extension 112 facing away from the second main body 111. The end of the fourth extension 213 facing away from the third main body 211 connects to the end of the second main body 111 facing away from the second extension 112.

Each first sub-connection unit 12 includes a first main body 121 and a first extension 122. The two first main bodies 121 are respectively arranged at two opposite ends of the second main body 111 along the first direction X, and each first main body 121 extends at least partially along the second direction Y. Each first extension 122 is arranged on a side of a corresponding one of the two first main bodies 121 facing the second housing 20 and is facing away from the second main body 111. The two first extensions 122 extend at least partially along the third direction Z. Each second sub-connection unit 22 includes a fourth main body 221 and a fifth extension 222. The two fourth main bodies 221 are respectively arranged at two opposite ends of the third main body 211 along the first direction X, and each fourth main body 221 extends at least partially along the second direction Y. Each fifth extension 222 is arranged on a side of a corresponding one of the two fourth main bodies 221 facing the first housing 10. The two fifth extensions 222 extend at least partially along the third direction Z. When the first housing 10 and the second housing 20 are assembled into one unit, the end of the first main body 121 adjacent to the second main body 111 connects to the end of the fifth extension 222 facing away from the fourth main body 221, and the end of the fourth main body 221 facing away from the third main body 211 connects to the end of the first extension 122 facing away from the first main body 121.

The side of the second main body 111 adjacent to the second housing 20 is provided with a first positioning portion 1113, which extends at least partially along the third direction Z. The side of the third main body 211 adjacent to the first housing 10 is provided with a fourth positioning portion 2112 extending at least partially along the third direction Z. The first positioning portion 1113 and the fourth positioning portion 2112 cooperate to position an assembly location of the first housing 10 and the second housing 20. Specifically, the first positioning portion 1113 has a hole configured to allow the fourth positioning portion 2112 to be inserted thereinto, thereby positioning the assembly location of the first housing 10 and the second housing 20. More specifically, there are three first positioning portions 1113: one of the three first positioning portions 1113 is arranged at a first end of the second main body 111 along the second direction Y, and the other two of the three first positioning portions 1113 are arranged a second end of the second main body 111 opposite to the first end along the second direction Y. Each of the other two first positioning portions 1113 are arranged adjacent to two opposite ends of the second main body 111 in the first direction X. There are three fourth positioning portions 2112: one of the three fourth positioning portions 2112 is arranged at one end of the third main body 211 along the second direction Y, and the other two are arranged at the other end of the third main body 211 along the second direction Y. Each of the other two fourth positioning portions 2112 are arranged adjacent to two opposite ends of the third main body 211 in the first direction X.

The side of the first main body 121 adjacent to the second housing 20 is provided with a third positioning portion 1211 extending at least partially along the third direction Z. The side of the fourth main body 221 adjacent to the first housing 10 is provided with a sixth positioning portion 2211 extending at least partially along the third direction Z. The third positioning portion 1211 and the sixth positioning portion 2211 cooperate to further position the assembly location of the first housing 10 and the second housing 20. Specifically, the third positioning portion 1211 has a hole configured to allow the sixth positioning portion 2211 to be inserted into, thereby positioning the assembly location of the first housing 10 and the second housing 20. More specifically, the third positioning portion 1211 is arranged at one end of the first main body 121 along the second direction Y. The sixth positioning portion 2211 is arranged at one end of the fourth main body 221 along the second direction Y.

As shown in FIGS. 2-4 and FIGS. 7-10, the first housing 10 is provided with at least one first edge limiting portion. The first edge limiting portion is arranged on the side of the first housing 10 adjacent to the second housing 20. The first edge limiting portion is positioned adjacent to an edge of the first housing 10, and extends at least partially toward the second housing 20.

The second housing 20 is provided with at least one second edge limiting portion. The second edge limiting portion is arranged on the side of the second housing 20 adjacent to the first housing 10. The second edge limiting portion is arranged adjacent to an edge of the second housing 20, and extends at least partially toward the first housing 10.

In this configuration, the edge of the first housing 10 extends toward the second housing 20. The first edge limiting portion and the edge of the first housing 10 are spaced apart to form a first limiting space. The second edge limiting portion is configured to be capable of being embedded into this first limiting space, thereby restricting relative displacement between the edge of the first housing 10 and the edge of the second housing 20.

Alternatively, the edge of the second housing 20 extends toward the first housing 10. The second edge limiting portion and the edge of the second housing 20 are spaced apart to form a second limiting space. The first edge limiting portion is configured to be capable of being embedded into this second limiting space, thereby restricting relative displacement between the edge of the first housing 10 and the edge of the second housing 20.

In this embodiment, the first edge limiting portion includes a first sub-edge limiting portion 131, a second sub-edge limiting portion 132, a third sub-edge limiting portion 133, and a fourth sub-edge limiting portion 134. The first limiting space includes a first sub-limiting space 141 and a second sub-limiting space 142. The second edge limiting portion includes a fifth sub-edge limiting portion 231, a sixth sub-edge limiting portion 232, a seventh sub-edge limiting portion 233, and an eighth sub-edge limiting portion 234. The second limiting space includes a third sub-limiting space 241 and a fourth sub-limiting space 242.

Specifically, the first sub-edge limiting portion 131 is arranged on the first sub-central unit 11 and/or the first sub-connection unit 12 and is located adjacent to an end of the first sub-central unit 11 and/or the first sub-connection unit 12 in the opposite direction of the second direction Y. The fifth sub-edge limiting portion 231 is arranged on the second sub-central unit 21 and/or the second sub-connection unit 22. Specifically, the fifth sub-edge limiting portion 231 is arranged at an end the second sub-central unit 21 and/or the second sub-connection unit 22 in the opposite direction of the second direction Y. There are four first sub-edge limiting portions 131. The edge of the first sub-central unit 11 at one end in the opposite direction of the second direction Y extends at least partially along the third direction Z. The first sub-edge limiting portion 131 and the edge of the first sub-central unit 11 form the first sub-limiting space 141. The fifth sub-edge limiting portion 231 is embedded into the first sub-limiting space 141, thereby restricting relative displacement between the ends of the first sub-central unit 11 and the second sub-central unit 21 in the opposite direction of the second direction Y.

The second sub-edge limiting portion 132 is arranged on the first sub-central unit 11 and is located adjacent to an end of the first sub-central unit 11 in the second direction Y. The sixth sub-edge limiting portion 232 is arranged on the second sub-central unit 21 and is located adjacent to an end of the second sub-central unit 21 in the second direction Y. There are two second sub-edge limiting portions 132. The edge of the second sub-central unit 21 at an end in the second direction Y extends at least partially along the third direction Z. The sixth sub-edge limiting portion 232 and the edge of the second sub-central unit 21 form the third sub-limiting space 241. The second sub-edge limiting portion 132 is embedded into the third sub-limiting space 241, thereby restricting relative displacement between the ends of the first sub-central unit 11 and the second sub-central unit 21 in the second direction Y.

The third sub-edge limiting portion 133 is arranged adjacent to the end of the first sub-connection unit 12 facing away from the first sub-central unit 11. The seventh sub-edge limiting portion 233 is provided at the end of the second sub-connection unit 22 facing away from the second sub-central unit 21. The edge at the end of the first sub-connection unit 12 facing away from the first sub-central unit 11 extends at least partially along the third direction Z. The third sub-edge limiting portion 133 and the edge of the first sub-connection unit 12 form the second sub-limiting space 142. The seventh sub-edge limiting portion 233 is embedded into the second sub-limiting space 142, thereby restricting relative displacement between the ends of the first sub-connection unit 12 and the second sub-connection unit 22 facing away from the first sub-central unit 11 or the second sub-central unit 21.

The fourth sub-edge limiting portion 134 is arranged adjacent to the end of the first sub-connection unit 12 facing the first sub-central unit 11 and is adjacent to an end of the first sub-connection unit 12 in the second direction Y. The eighth sub-edge limiting portion 234 is provided at the end of the second sub-connection unit 22 adjacent to the second sub-central unit 21, and is adjacent to an end of the second sub-connection unit 22 in the second direction Y. The edge at the end of the first sub-connection unit 12 facing away from the first sub-central unit 11 extends at least partially along the third direction Z. The eighth sub-edge limiting portion 234 and the edge of the second sub-connection unit 22 form the fourth sub-limiting space 242. The fourth sub-edge limiting portion 134 is embedded into the fourth sub-limiting space 242, thereby restricting relative displacement between the ends of the first sub-connection unit 12 and the second sub-connection unit 22 adjacent to the first sub-central unit 11 or the second sub-central unit 21.

As shown in FIGS. 2-5 and FIGS. 7-10, the first housing 10 and the second housing 20 may be connected using one of the following methods: ultrasonic welding, snap-fit connection, thermal fusion connection, or screw connection. In this embodiment, ultrasonic welding is employed to connect the first housing 10 and the second housing 20.

Specifically, the edge of the first housing 10 is provided with an ultrasonic welding groove, and the second housing 20 is provided with an ultrasonic welding rib corresponding to the ultrasonic welding groove; alternatively, the edge of the first housing 10 is provided with an ultrasonic welding rib, and the second housing 20 is provided with an ultrasonic welding groove corresponding to the ultrasonic welding rib.

More specifically, the ultrasonic welding grooves include a first ultrasonic welding groove 151, a second ultrasonic welding groove 152, and a third ultrasonic welding groove 153. The ultrasonic welding ribs include a first ultrasonic welding rib 251, a second ultrasonic welding rib 252, and a third ultrasonic welding rib 253.

The first ultrasonic welding groove 151 is provided at one end of the first housing 10 in the direction opposite to the second direction Y. The first ultrasonic welding rib 251 is provided at one end of the second housing 20 in the direction opposite to the second direction Y. Under the action of ultrasonic welding, the first ultrasonic welding rib 251 and the first ultrasonic welding groove 151 ultrasonically bond the first housing 10 and the second housing 20 at their ends in the direction opposite to the second direction Y.

There are two second ultrasonic welding grooves 152. The two second ultrasonic welding grooves 152 are respectively arranged at ends of the two first sub-connection units 12 adjacent to two opposite ends of the first housing 10 along the first direction X. There are two second ultrasonic welding ribs 252 corresponding to the two second ultrasonic welding grooves 152 respectively. The two second ultrasonic welding ribs 252 are respectively arranged at the two second sub-connection units 22, specifically adjacent to two opposite ends of the second housing 20 along the first direction X. Under the action of ultrasonic welding, the second ultrasonic welding ribs 252 and the second ultrasonic welding grooves 152 are ultrasonically bonded to connect the first housing 10 and the second housing 20 at their opposite ends along the first direction X.

The third ultrasonic welding groove 153 is provided at one end of the first housing 10 in the second direction Y. The third ultrasonic welding groove 153 is arranged along the edge at one end of one of the two first sub-connection units 12 in the second direction Y, the edge of one of the two first sub-connection units 12 adjacent to the first sub-central unit 11, the edge at one end of the first sub-central unit 11 in the second direction Y, the edge of the other of the two first sub-connection units 12 adjacent to the first sub-central unit 11, and the edge at one end of the other of the two first sub-connection units 12 in the second direction Y. The third ultrasonic welding rib 253 is provided at one end of the second housing 20 in the second direction Y. The third ultrasonic welding rib 253 is provided along the edge at one end of one second sub-connection unit 22 in the second direction Y, the edge of the one second sub-connection unit 22 adjacent to the second sub-central unit 21, the edge at one end of the second sub-central unit 21 in the second direction Y, the edge of the other second sub-connection unit 22 adjacent to the second sub-central unit 21, and the edge at one end of the other second sub-connection unit 22 in the second direction Y. Under the action of ultrasonic welding, the third ultrasonic welding rib 253 and the third ultrasonic welding groove 153 ultrasonically bond the first housing 10 and the second housing 20 at their ends in the second direction Y.

As shown in FIGS. 1-3 and FIGS. 5-6, each first sub-connection unit 12 includes the first main body 121 and the first extension 122. The two first main bodies 121 are respectively arranged on two opposite sides of the first sub-central unit 11. Each first main body 121 extends at least partially along the second direction Y. The first extension 122 is arranged at the end of the first main body 121 facing away from the first sub-central unit 11 and extends at least partially along the third direction Z. The third direction Z is perpendicular to the first direction X, and the third direction Z is perpendicular to the second direction Y. The side of the first extension 122 facing away from the first sub-connection unit 12 is provided with a mounting blind hole 1221. The mounting blind hole 1221 is configured to accommodate at least a portion of the game controller, enabling a nested connection between the game controller and the first extension 122.

Specifically, an installation protrusion is provided on the side of the game controller adjacent to the controller grip 100. This installation protrusion is configured to be inserted into the mounting blind hole 1221, thereby restricting relative displacement between the game controller and the controller grip 100 in a direction perpendicular to the direction from the controller grip 100 toward the game controller, and enhancing the stability of the connection between the controller grip 100 and the game controller.

Specifically, the second ultrasonic welding groove 152 corresponds to the bottom wall of the mounting blind hole 1221. The dimension of the bottom wall of the mounting blind hole 1221 in the third direction Z is greater than the dimension of the side wall of the mounting blind hole 1221 in the third direction Z, thereby ensuring the mechanical strength of the ultrasonic weld.

As shown in FIGS. 2-9, the controller grip 100 further includes the control circuit board 31, the charging interface 32, and the two electrical connectors 33.

The control circuit board 31 includes the central circuit board 311 and the two connection circuit boards 312. The central circuit board 311 is electrically connected to each of the two connection circuit boards 312. The central circuit board 311 is arranged on a side of the first sub-central unit 11 along the third direction Z. The second sub-central unit 21 covers the side of the central circuit board 311 along the third direction Z from the opposite direction of the third direction Z. When the first housing 10 and the second housing 20 are assembled into one unit, both the central circuit board 311 and the two connection circuit boards 312 are located within the receiving cavity 50.

The charging interface 32 is provided on the central circuit board 311. The first sub-central unit 11 and/or the second sub-central unit 21 is provided with an avoidance structure 103 to allow the charging interface 32 to electrically connect with an external power source.

Each second sub-connection unit 22 includes the fourth main body 221 and the fifth extension 222. The two fourth main bodies 221 are respectively arranged on two opposite sides of the second sub-central unit 21. Each fourth main body 221 extends at least partially along the second direction Y. The fifth extension 222 is arranged on the side of the fourth main body 221 adjacent to the second sub-central unit 21 and extends at least partially in the opposite direction of the third direction Z.

Each connection circuit board 312 is arranged on the side of the first extension 122 adjacent to the first sub-central unit 11. The fourth main body 221 covers the first extension 122 from the opposite direction of the third direction Z, such that the fifth extension 222 covers the side of the connection circuit board 312 facing away from the first extension 122.

Each electrical connector 33 is provided on the side of the connection circuit board 312 facing toward the first extension 122. The first extension 122 is provided with an avoidance hole 1225 to allow the electrical connector 33 to be electrically connected to the game controller.

Specifically, the avoidance structure 103 may be provided in the first sub-central unit 11, in the second sub-central unit 21, or formed jointly by both the first sub-central unit 11 and the second sub-central unit 21. The avoidance structure 103 is used to allow the charging interface 32 to pass therethrough, or for a portion of the external power source to pass therethrough, so as to enable the charging interface 32 to be electrically connected to the external power source.

In this embodiment, the first sub-central unit 11 includes the second extension 112 at one end in the direction opposite to the second direction Y. The second extension 112 extends at least partially along the third direction Z and is provided with a first avoidance groove 1121. The second sub-central unit 21 includes the third extension 212 at one end in the direction opposite to the second direction Y. The third extension 212 extends at least partially along the third direction Z and is provided with a second avoidance groove 2121. The first avoidance groove 1121 and the second avoidance groove 2121 together constitute the avoidance structure 103.

Specifically, the side of the second main body 111 facing the second housing 20 is provided with a first support portion 1115, and the side of the third main body 211 facing the first housing 10 is provided with a second support portion 2114. The first support portion 1115 extends at least partially along the third direction Z, and the second support portion 2114 extends at least partially along the direction opposite to the third direction Z. The central circuit board 311 is clamped between the first support portion 1115 and the second support portion 2114. In detail, the first support portion 1115 is "T"-shaped, comprising a first part extending along the first direction X and a second part extending along the second direction Y. The second support portion 2114 includes a part extending along the second direction Y.

As shown in FIGS. 2-3, FIG. 5, and FIGS. 7-9, the side of the second main body 111 facing the second housing 20 is provided with a first retaining portion 1112. The first retaining portion 1112 is provided with a blind hole for a screw 80 to be tightened. The central circuit board 311 is provided with a screw hole 3112, allowing the screw 80 to pass through the screw hole 3112 and to be engaged into the first retaining portion 1112, thereby securing the central circuit board 311 to the first housing 10.

The side of the second main body 111 facing the second housing 20 is provided with a second positioning portion 1114 extending at least partially along the third direction Z. The central circuit board 311 is provided with a first limiting hole 3111. The first limiting hole 3111 is configured to allow the second positioning portion 1114 to passes, thereby restraining movement of the central circuit board 311 along the first direction X.

In other embodiments, the connection between the central circuit board 311 and the first housing 10 may be achieved through snap-fit or adhesive bonding.

As shown in FIGS. 2-3 and FIGS. 5-6, the magnetic member 40 is placed between the connection circuit board 312 and the first extension 122. The first extension 122 is provided with a magnetic limiting portion 1222 along the edge of the magnetic member 40. The magnetic limiting portion 1222 extends at least partially in the direction from the first extension 122 toward the connection circuit board 312, to the side of the connection circuit board 312 adjacent to the first extension 122.

Specifically, the side of the first extension 122 adjacent to the first sub-connection unit 12 is provided with the magnetic limiting portion 1222, which extends at least partially along the first direction X. The magnetic limiting portion 1222 has a blind hole for the magnetic member 40 to be embedded, preventing displacement of the magnetic member 40 in the second direction Y and the third direction Z.

As shown in FIGS. 2-3 and FIGS. 5-6, the side of the first extension 122 adjacent to the first sub-connection unit 12 is provided with a hot-melt post 1223 extending at least partially along the first direction X. The connection circuit board 312 is provided with a hot-melt hole 3122 configured to allow the hot-melt post 1223 to pass therethrough. Using hot-melting, the connection circuit board 312 is secured to the first extension 122, thus being installed onto the first housing 10. When the connection circuit board 312 is installed onto the first extension 122, the side of the connection circuit board 312 facing the first extension 122 abuts against the magnetic limiting portion 1222, which can prevent displacement of the magnetic member 40 in the first direction X. Furthermore, foam 60 is arranged between the connection circuit board 312 and the magnetic member 40 to prevent direct contact between the magnetic member 40 and the connection circuit board 312. It can protect the connection circuit board 312 from damage by the magnetic member 40 and fixes a relative position between the magnetic member 40 and the first housing 10.

As shown in FIGS. 2-3 and FIGS. 5-6, the side of the first extension 122 adjacent to the first sub-connection unit 12 is provided with a fourth retaining portion 1226 and the fourth retaining portion 1226 extends at least partially along the first direction X. The connection circuit board 312 is provided with a second limiting hole 3121 configured to allow the fourth retaining portion 1226 to pass therethrough. The fourth retaining portion 1226 can pass through the second limiting hole 3121 to fix the relative position of the connection circuit board 312 and the first housing 10 in the second direction Y and the third direction Z.

Specifically, the electrical connector 33 is provided with a third limiting hole 331. When the electrical connector 33 is installed onto the connection circuit board 312, the second limiting hole 3121 aligns with the third limiting hole 331. The third limiting hole 331 is configured to allow the fourth retaining portion 1226 to pass therethrough, thereby simultaneously fixing the relative positions of the electrical connector 33 and the connection circuit board 312 in the second direction Y and the third direction Z. The electrical connector 33 is sandwiched between the connection circuit board 312 and the first extension 122. Combined with arrangement of the third limiting hole 331 and the fourth retaining portion 1226, it ensures the strength of the connection between the electrical connector 33 and the game controller. When the electrical connector 33 is a male plug inserted into a female socket of the game controller, the configurations ensure the insertion strength. When the male plug and the female socket are interference-fitted, the connection between the game controller and the controller grip 100 is further reinforced.

As shown in FIGS. 2-6, the side of the fifth extension 222 adjacent to the first extension 122 is provided with a third retaining portion 2221 and the third retaining portion 2221 extends toward the first extension 122. When the second housing 20 and the first housing 10 are assembled into one unit, the third retaining portion 2221 abuts against the side of the connection circuit board 312 facing away from the first extension 122, further reinforcing fixation of the connection circuit board 312 and preventing displacement of the connection circuit board 312 in the first direction X.

In other embodiments, the fourth retaining portion 1226 may have a blind hole for a screw to be tightened. A screw can be inserted and tightened to secure the electrical connector 33, the connection circuit board 312, and the first extension 122.

In other embodiments, the connection between the connection circuit board 312 and the first housing 10 may be achieved through snap-fit or adhesive bonding.

As shown in FIGS. 2-3 and FIGS. 5-6, the side of the first extension 122 adjacent to the first sub-connection unit 12 is provided with an electrical connector mounting groove 1224. The electrical connector mounting groove 1224 is configured to accommodate a portion of the electrical connector 33. This configuration fixes the relative position of the electrical connector 33 with respect to the connection circuit board 312 and the first extension 122 in the second direction Y and the third direction Z.

As shown in FIGS. 2-3 and FIGS. 5-6, the first extension 122 is provided with the avoidance hole 1225, which allows for electrical connection between the electrical connector 33 and the game controller. In this embodiment, the electrical connector 33 is a male plug, and the game controller is provided with a female socket. A portion of the electrical connector 33 is inserted into the female socket to establish an electrical connection between the controller grip 100 and the game controller. A portion of the electrical connector 33 passes through the avoidance hole 1225 to be inserted into the female socket of the game controller, thereby achieving the electrical connection between the controller grip 100 and the game controller.

Although specific descriptions have been provided in conjunction with the accompanying drawings and embodiments in the present disclosure, it is understood that the above descriptions do not limit this invention in any form. Those skilled in the art can make deformations and changes to the present disclosure according to needs without deviating from the essence and scope of this invention, and these deformations and changes all fall within the scope of this invention.

## Claims

1. A controller grip (100), configured to be detachably connected to two game controllers, wherein the controller grip (100) comprises:
a central unit (101); and
two connection units (102), respectively arranged on two opposite sides of the central unit (101);
the controller grip (100) is characterized that,
a direction from one of the connection units (102) towards another connection unit (102) is defined as a first direction; the two connection units (102) extend at least partially along a second direction, and the second direction is perpendicular to the first direction;
wherein a magnetic member (40) is provided inside each connection unit (102), the magnetic member is configured to attract a magnetic component in the game controller, enabling the game controllers to be detachably connected to the connection units (102) respectively.

2. The controller grip (100) according to claim 1, is characterized that a mounting blind hole (1221) is provided on a side of each connection unit (102) facing away from the central unit (101), and the mounting blind hole (1221) is configured to accommodate at least a portion of one of the game controllers, enabling the game controller to be connected to the connection unit (102).

3. The controller grip (100) according to claim 2, is characterized that each connection unit (102) is provided with a first light display hole (1212); the first light display hole (1212) extends along a third direction perpendicular to both the second direction and the first direction; and the first light display hole (1212) is communicated with the mounting blind hole (1221) to allow light emitted by the portion of the one of the game controllers embedded in the mounting blind hole (1221) to pass through the first light display hole (1212).

4. The controller grip (100) according to claim 1, is **characterized by** further comprising a charging interface (32), a control circuit board (31), and an electrical connector (33) connected in sequence; the charging interface (32) is configured to be electrically connected to an external power source, the electrical connector (33) is configured to be electrically connected to the game controllers, and the control circuit board (31) is configured to control whether to discharge to the electrical connector (33) to charge the game controller.

5. The controller grip (100) according to claim 4, is **characterized by** further comprising an indicator light unit (70) electrically connected to the control circuit board (31) to allow the control circuit board (31) to control the display of the indicator light unit (70).

6. The controller grip (100) according to claim 1, is **characterized by** comprising a first housing (10) and a second housing (20); the first housing (10) and the second housing (20) are connected to form an receiving cavity (50) for accommodating the magnetic member (40); the first housing (10) comprises a first sub-central unit (11) and two first sub-connection units (12) respectively arranged on two opposite sides of the first sub-central unit (11); the second housing (20) comprises a second sub-central unit (21) and two second sub-connection units (22) respectively arranged on two opposite sides of the second sub-central unit (21); the first sub-central unit (11) and the second sub-central unit (21) together form the central unit (101), and one of the two first sub-connection units (12) and a corresponding one of the two adjacent second sub-connection units (22) together form one of the two connection units (102).

7. The controller grip (100) according to claim 6, is characterized that the first housing (10) is provided with at least one first edge limiting portion arranged on a side of the first housing (10) adjacent to the second housing (20) and adjacent to an edge of the first housing (10), and at least a part of the first edge limiting portion extends toward the second housing (20);
the second housing (20) is provided with at least one second edge limiting portion arranged on a side of the second housing (20) adjacent to the first housing (10) and adjacent to an edge of the second housing (20), and at least a part of the second edge limiting portion extends toward the first housing (10);
wherein the edge of the first housing (10) extends toward the second housing (20), and the first edge limiting portion and the edge of the first housing (10) are spaced apart to form a first limiting space configured to accommodate the second edge limiting portion to limit relative movement between the edge of the first housing (10) and the edge of the second housing (20);
or, an edge of the second housing (20) extends toward the first housing (10), and the second edge limiting portion and the edge of the second housing (20) are spaced apart to form a second limiting space configured to accommodate the first edge limiting portion to limit relative movement between the edge of the first housing (10) and the edge of the second housing (20).

8. The controller grip (100) according to claim 6, is characterized that each first sub-connection unit (12) comprises a first main body (121) and a first extension (122); two first main bodies (121) are respectively arranged on two opposite sides of the first sub-central unit (11), and each first main body (121) extends at least partially along the second direction; each first extension (122) is arranged at an end of a corresponding one of the two first main bodies (121) facing away from the first sub-central unit (11) and extends at least partially along a third direction; the third direction is perpendicular to both the first direction and the second direction; a mounting blind hole (1221) is provided on a side of each first extension (122) facing away from another first sub-connection unit (12); the mounting blind hole (1221) is configured to accommodate at least a portion of the game controller so as to enable the game controller to be connected to the control grip (100).

9. The controller grip (100) according to claim 8, is **characterized by** further comprising a control circuit board (31), a charging interface (32), and two electrical connectors (33);
the control circuit board (31) comprises a central circuit board (311) and two connection circuit boards (312) electrically connected to the central circuit board (311); the central circuit board (311) is arranged on a side of the first sub-central unit (11) along the third direction; the second sub-central unit (21) is covered on a side of the central circuit board (311) along an opposite direction of the third direction;
the charging interface (32) is arranged on the central circuit board (311); the first sub-central unit (11) and/or the second sub-central unit (21) is provided with an avoidance structure (103) configured to allow the charging interface (32) to be electrically connected to an external power source;
each second sub-connection unit (22) comprises a fourth main body (221) and a fifth extension (222); the two fourth bodies (221) are respectively arranged on two opposite sides of the second sub-central unit (21), and each fourth main body (221) extends at least partially along the second direction; the fifth extension (222) is disposed on a side of the fourth main body (221) adjacent to the second sub-central unit (21) and extends at least partially along the opposite direction of the third direction;
each connection circuit board (312) is arranged on a side of a corresponding one of the two first extensions (122) adjacent to the first sub-central unit (11); the fourth main body (221) is configured to cover on the corresponding one of the two first extensions (122) along the opposite direction of the third direction and the fifth extension (222) is configured to be covered on a side of the connection circuit board (312) facing away from the corresponding one of the two first extensions (122);
each electrical connector (33) is arranged on a side of a corresponding one of the two connection circuit boards (312) facing the first extension (122); the corresponding one of the two first extensions (122) is provided with an avoidance hole (1225) configured to allow the electrical connector (33) to be electrically connected to the game controller.

10. The controller grip (100) according to claim 9, is characterized that the magnetic member (40) is arranged between each connection circuit board (312) and the corresponding one of the two first extensions (122); the corresponding one of the two first extensions (122) is provided with a magnetic limiting portion (1222) along an edge of the magnetic member (40); at least a part of the magnetic limiting portion (1222) extends along a direction from the first extension (122) toward the connection circuit board (312), extending to a side of the connection circuit board (312) adjacent to the first extension (122).
